**Europäisches Patentamt**

**European Patent Office**

**Office européen des brevets**

(19)

(11) Numéro de publication : **0 133 122 B1**

# (12) FASCICULE DE BREVET EUROPÉEN

(45) Date de publication du fascicule du brevet :
02.12.87

(21) Numéro de dépôt : **84401544.6**

(22) Date de dépôt : **20.07.84**

(51) Int. Cl.⁴ : **F 16 F 13/00, B 60 K 5/12**

(54) **Dispositif amortisseur de vibrations.**

(30) Priorité : 21.07.83 FR 8312046

(43) Date de publication de la demande :
13.02.85 Bulletin 85/07

(45) Mention de la délivrance du brevet :
02.12.87 Bulletin 87/49

(84) Etats contractants désignés :
**BE DE GB IT NL SE**

(56) Documents cités :
**EP-A- 0 058 408
DE-A- 2 454 834
DE-A- 2 712 641
FR-A- 942 806
FR-A- 1 505 877
FR-A- 2 415 241
FR-A- 2 448 664
FR-A- 2 524 951
GB-A- 2 055 172
US-A- 2 387 065
US-A- 4 331 224**

(73) Titulaire : **HUTCHINSON
2 rue Balzac
F-75008 Paris (FR)**

(72) Inventeur : **Ray, Jean
6, rue du Stade
F-28200 Donnemain (FR)**

(74) Mandataire : **Behaghel, Pierre et al
CABINET PLASSERAUD 84 rue d'Amsterdam
F-75009 Paris (FR)**

## Description

La présente invention concerne un dispositif amortisseur des vibrations pouvant naître entre un support fixe et un organe mobile, du type comportant un élément élastique principal intercalé entre ledit support et ledit organe et un système amortisseur monté en parallèle sur l'élément élastique et comprenant une armature reliée à l'organe mobile et un piston monté sur l'armature et baignant dans un milieu amortisseur contenu dans une cuvette solidaire du support fixe.

De tels dispositifs peuvent être utilisés pour le support des moteurs d'automobiles.

Dans un dispositif connu du type ci-dessus mentionné, on a monté le piston sur l'armature avec un certain jeu axial, à savoir un jeu opérant dans la direction principale des vibrations.

Ce jeu est calculé en fonction de l'amplitude des vibrations à différentes fréquences, d'une part pour que l'effet amortisseur du piston ne s'exerce que pour les basses fréquences des vibrations, environ de 0 à 50 Hz, pour éviter les trop grands débattements du moteur par exemple en cas de dénivellation brutale agissant sur une roue, et d'autre part pour qu'au contraire cet effet amortisseur ne s'exerce pas pour les fréquences plus élevées, à savoir d'environ 50 à 200 Hz, ceci pour diminuer les efforts s'exerçant sur le dispositif, et donc le bruit, à haut régime.

Ainsi, en considérant qu'une valeur courante de débattement du moteur est d'environ plus ou moins 1 mm de 0 à 50 Hz, et d'environ plus ou moins 0,1 mm de 50 à 200 Hz, on voit qu'un jeu axial de montage d'environ 0,2 mm du piston sur l'armature permettra de résoudre ce problème.

Cependant, l'inconvénient de ce type de dispositif réside .dans le fait que, par suite de la viscosité du milieu amortisseur dans lequel il baigne, le piston a tendance à se coller à l'armature qu'il entoure, ce qui a tendance à lui restituer son rôle amortisseur pour les hautes fréquences, ce qu'il est souhaitable d'éviter.

De plus, lorsque ce collage ne se produit pas, le piston est bruyant, du fait de ses débattements répétés sur l'armature, dans la gamme des basses fréquences.

Le document DE-A-2 712 641 décrit un autre type de dispositif amortisseur comportant une cuvette rigide de support obturée par un anneau de caoutchouc supportant un moteur ou autre système vibrant, cet anneau constituant l'élément élastique principal. Cet anneau est rigidement relié par une armature à la partie centrale d'une plaque de tissu ou d'une bague de caoutchouc immergée dans un liquide amortisseur contenu dans la cuvette, ce qui constitue un système amortisseur monté en parallèle sur l'élément élastique.

L'inconvénient de ce dispositif est qu'il a un grand encombrement radial et que l'armature centrale n'est pas isolée du liquide amortisseur.

La présente invention propose une construction plus simple et plus fiable pour les dispositifs amortisseurs du genre en question, et ne présentant pas les inconvénients précités.

A cet effet, ces dispositifs sont essentiellement caractérisés selon l'invention en ce que le piston est monté sur l'armature avec interposition radiale d'un manchon en matière élastique interposé jointivement entre l'armature et un tube extérieur solidaire du piston.

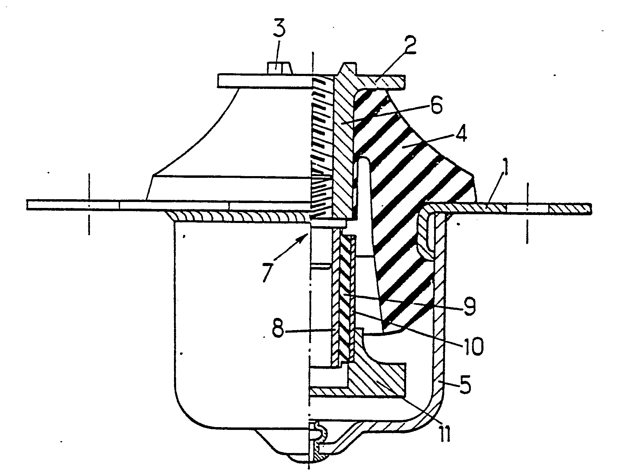

L'invention va maintenant être décrite à titre nullement limitatif, avec référence à la figure unique du dessin ci-annexé.

Cette figure unique représente en demi-coupe axiale et demi-vue extérieure, un dispositif amortisseur établi selon l'invention.

On a référencé en 1 le support fixe, solidaire par exemple du châssis d'un véhicule, et en 2 l'organe mobile à plots de positionnement 3, sur lequel viendra reposer le moteur.

Entre le support 1 et l'organe 2 est intercalé un élément élastique principal 4 engagé à force, par déformation élastique, dans un boîtier d'acier 5 soudé sous le support 1, et dont le fond constitue une cuvette, laquelle contient un milieu amortisseur (non représenté), constitué par exemple par de l'huile à haute viscosité.

L'élément élastique principal 4 est collé sur un noyau creux 6 central de l'organe mobile 2, lequel noyau 6 est vissé sur un plot 7 de centrage et de liaison à une armature tubulaire axiale 8, la moitié inférieure de ce plot 7 étant emmanchée dans l'extrémité supérieure de ladite armature.

Sur cette armature 8 est collé un manchon 9 en matière élastique lui-même entouré par un tube rigide 10.

Sur l'extrémité inférieure de ce tube est monté rigidement un disque d'amortissement 11 formant piston, qui baigne dans le milieu amortisseur occupant le fond de la cuvette 5.

On obtient ainsi un dispositif amortisseur de vibrations comprenant, entre le support·fixe 1 et l'organe mobile 2, les deux systèmes suivants montés en parallèle :

l'élément élastique principal 4,

un système amortisseur comprenant, en série, le piston amortisseur 11 et le manchon élastique 9.

Comme expliqué plus haut, le manchon élastique 9 agira surtout aux fréquences de vibrations assez élevées, pour empêcher une rigidification excessive à ces fréquences, l'effet amortisseur du piston 11 s'exerçant essentiellement aux fréquences basses, ceci avec une transition très progressive entre les deux gammes de fréquences, et sans création notable de bruit.

La construction à manchon élastique selon l'invention présente sur la construction à rondelles élastiques antérieurement connue un certain nombre d'avantages et en particulier les suivants :

le manchon est unique,

il présente un encombrement radial très faible,

il assure le montage élastique du piston non seulement selon la direction axiale, mais aussi dans toutes les directions, ce qui supprime automatiquement le risque de grippage qui pouvait se produire entre les faces cylindriques mutuellement coulissantes du piston et de l'armature,

cette construction permet en outre d'isoler l'armature centrale du liquide visqueux,

elle permet également d'utiliser pour le piston un disque plein et non perforé en son centre terminant axialement l'armature centrale.

## Revendications

1. Dispositif amortisseur des vibrations pouvant naître entre un support fixe (1) et un organe mobile (2) du type comportant un élément élastique principal (4) intercalé entre ledit support et ledit organe, et un système amortisseur monté en parallèle sur l'élément élastique principal et comprenant une armature (8) reliée à l'organe mobile et un piston (11) monté élastiquement sur l'armature et baignant dans un milieu amortisseur contenu dans une cuvette (5) solidaire du support fixe, caractérisé en ce que le montage du piston sur l'armature est assuré par interposition entre eux d'un manchon (9) en matériau élastique interposé jointivement entre l'armature (8) et un tube extérieur (10) solidaire du piston (11).

2. Dispositif selon la revendication 1, caractérisé en ce que le piston (11) est un disque plein rapporté sur une extrémité du tube extérieur (10).

## Claims

1. A damper device for damping vibrations which may occur between a fixed support (1) and a movable member (2) of the type comprising a main resilient element (4) interposed between said support and said member and a damper system mounted in parallel on the main resilient element and comprising a carrier fitment (8) connected to the movable member and a piston (11) resiliently mounted on the carrier fitment and immersed in a damper medium contained in a bowl (5) which is fixed with respect to the fixed support, characterised in that the piston is mounted on the carrier fitment by the interposition between the piston and the carrier fitment of a sleeve (9) of resilient material which is connectingly interposed between the carrier fitment (8) and an external tube (10) which is fixed with respect to the piston (11).

2. A device according to claim 1 characterised in that the piston (11) is a solid disc fitted to an end of the external tube (10).

## Patentansprüche

1. Vorrichtung zur Dämpfung von Schwingungen zwischen einer festen Abstützung (1) und einem beweglichen Teil (2), die aus einem elastischen Hauptelement (4), das zwischen der Abstützung und dem beweglichen Teil eingesetzt ist und einem Dämpfungssystem besteht, das parallel zu dem elastischen Hauptelement befestigt ist und aus einer Armatur (8) aufgebaut ist, die mit dem beweglichen Teil und einem Kolben (11) verbunden ist, der elastisch an der Armatur angebracht ist und in ein Dämpfungsmedium eintaucht, das sich in einer Schale (5) der festen Abstützung befindet, dadurch gekennzeichnet, daß die Anbringung des Kolbens (11) an der Armatur (8) unter Zwischenlegen einer Hülse (9) aus elastischem Material erfolgt, die dicht zwischen die Armatur (8) und ein äußeres Rohr (10), das an dem Kolben (11) befestigt ist, eingefügt ist.

2. Vorrichtung nach Anspruch 1, dadurch gekennzeichnet, daß der Kolben (11) aus einer vollen Scheibe besteht, die an einem Ende des äußeren Rohres (10) angebracht ist.